# EUROPEAN PATENT APPLICATION

(11) **EP 4 629 033 A1**
(43) Date of publication of application: **08.10.2025**
(21) Application number: 25166703.6
(22) Date of filing: 27.03.2025
(51) Int. Cl.: G06F 3/01, G06F 3/147, G02B 27/01, G06T 3/40

(54) **IMPROVING EXTENDED-REALITY RENDERING USING AUTOMATIC PANEL ENHANCEMENTS BASED ON HARDWARE-PIXELS-PER-DEGREE ESTIMATIONS, AND SYSTEMS AND METHODS OF USE THEREOF**

(30) Priority: 27.03.2024 US 202463570738 P; 25.03.2025 US 202519090295
(71) Applicant: Meta Platforms Technologies, LLC, Menlo Park, CA 94025 (US)
(72) Inventor: Rao Padebettu, Rohit, Menlo Park (US); Lansel, Steven Paul, Menlo Park (US); Ratmansky, Irad, Menlo Park (US); Luu, Ngheip Chinh, Menlo Park (US)
(74) Representative: Murgitroyd & Company

(57) **Abstract**

The present disclosure regards devices, methods, and systems for dynamically enhancing visual XR content. An example device is an XR device with a display device, a lens, and one or more programs. The programs of the XR device include instructions for determining a hardware pixels-per-degree ("HPPD") metric for the XR device and for determining a render pixels-per-degree ("RPPD") metric for visual XR content to be displayed by the XR device. The programs further include instructions for determining whether a difference between the HPPD metric and the RPPD metric satisfy a minimum difference threshold and, after determining that the threshold is satisfied, enhancing the visual XR content based on the difference between the metrics. For example, if the HPPD metric is greater than the RPPD metric, then enhancement may involve applying a sharpening filter to the visual XR content; otherwise, it may involve super-sampling the content.

## Description

### RELATED APPLICATION

This application claims priority to U.S. Provisional Application Serial No. 63/570,738, filed March 27, 2024, entitled "Extended-Reality Rendering Using Automatic Panel Enhancements Based On Hardware-Pixels-Per-Degree Estimations, and Systems and Methods of Use Thereof," which is incorporated herein by reference.

### TECHNICAL FIELD

The present disclosure relates, generally, to extended reality (XR) devices and, more specifically, to enhancing visual XR content for use by said XR devices.

### BACKGROUND

Extended reality technologies are reshaping how we engage with digital content. By integrating the virtual and physical worlds, these technologies offer immersive experiences that transcend the boundaries of traditional computing interfaces. These experiences foster creativity, accelerate learning, and enhance entertainment.

Key to the potential of XR technologies is user immersion. When a user feels immersed in an XR environment, the digital elements of that environment become an integral part of the user's reality. This allows the user to forget the XR interface and instead focus their attention on the XR environment, thus amplifying the impact of that environment.

Achieving immersion, however, is a complex task. It hinges largely on the precise rendering of XR objects, a challenge compounded by user positioning, environmental factors, hardware constraints, and various other factors.

As such, there is a need to address one or more of the above-identified challenges (e.g., properly rendering immersive XR environments ). A brief summary of solutions to the issues noted above are described below.

### SUMMARY

Certain use cases in XR (e.g., user interfaces (UIs), webpages) involve the display of visual content with fine details. These use cases generally require that the content is crisp when it is presented to a user. Additionally, it is important that the content does not flicker from frame to frame as a result of sampling artifacts often caused by head movement. This is especially true when the content includes text, which is difficult to read unless it is sharp and flicker-free.

Application developers sometimes employ enhancements (e.g., sharpening, super-sampling) to mitigate the artifacts introduced when visual XR content (e.g., including one or more two-dimensional (2D) images and/or three-dimensional (3D) objects) is mapped to the pixels of an XR display. However, this approach struggles when deployed across varying devices with different hardware, and it fails in dynamic situations where the user is actively moving in a 3D space.

These problems stem from multiple factors. First, variable hardware and rendering factors make it difficult for application developers to consistently apply the right enhancement. Additionally, application developers may not have access to all of the information they need to determine how best to enhance visual XR content. Second, enhancements (e.g., sharpening, super-sampling) increase rendering costs and should therefore be used only when and to the extent that they are necessary in order to maximize performance of the XR device. Third, improper "enhancement" of visual XR content can actually lower the visual quality of said content. For example, application of a sharpening filter to a minified XR panel will exacerbate flicker artifacts on the panel. And fourth, rendering costs due to content enhancement can introduce frame tears, further complicating the calculus regarding when and how visual XR content should be enhanced.

The present disclosure provides devices, systems, and methods for addressing some of the aforenoted problems by dynamically enhancing visual XR content. Many of these devices, systems, and methods rely on a hardware-centric pixels-per-degree ("HPPD") metric for a given XR device. As used herein, HPPD refers to the inherent separation of pixels of the display of an XR device as observed by the user of an XR device. An HPPD metric can be used, for example, to determine whether and how to enhance certain visual content.

Example embodiments of the innovations discussed herein include the following:
In a first aspect of the invention, an XR device includes a display device and a lens. The XR device also includes one or more programs that are stored in memory, configured to be executed by one or more processors. The one or more programs include instructions for determining an HPPD metric for the XR device based on a characteristic of the display device and a characteristic of the lens. The one or more programs also include instructions for receiving XR application data regarding visual XR content from an XR application running on the XR device. Additionally, the one or more programs include instructions for determining an render pixels-per-degree ("RPPD") metric for the visual XR content based on the XR application data. Further, the one or more programs include instructions for, responsive to determining that a difference between the HPPD metric and the RPPD metric satisfies a minimum difference threshold, enhancing the visual XR content based on the difference between the HPPD metric and the RPPD metric.

In some embodiments, the one or more programs further include instructions for enhancing the visual XR content by (i) applying a sharpening filter to the visual XR content if the HPPD metric is greater than the RPPD metric or (ii) applying a super-sampling filter to the visual XR content if the HPPD metric is less than the RPPD metric.

In some embodiments, the one or more programs further include instructions for: receiving additional XR application data regarding additional visual XR content from the XR application; determining an RPPD metric for the additional visual XR content based on the additional XR application data; and responsive to determining that a difference between the HPPD metric and the RPPD metric for the additional visual XR content satisfies the minimum difference threshold, (i) applying a sharpening filter to the additional visual XR content if the HPPD metric is greater than the RPPD metric for the additional visual XR content or (ii) applying a super-sampling filter to the additional visual XR content if the HPPD metric is less than the RPPD metric for the additional visual XR content.

In some embodiments, the one or more programs further include instructions for: determining a plurality of HPPD metrics for the XR device, wherein each HPPD metric of the plurality of HPPD metrics corresponds to a respective location on the display device; determining a plurality of RPPD metrics for the visual XR content, wherein each RPPD metric of the plurality of RPPD metrics corresponds to a respective portion of the visual XR content; and for each of the HPPD metrics of the plurality of HPPD metrics and for each of the RPPD metrics of the plurality of RPPD metrics: responsive to determining that a difference between a particular HPPD metric of the plurality of HPPD metrics and a particular RPPD metric of the plurality of RPPD metrics satisfies the minimum difference threshold, wherein the particular HPPD metric corresponds to a particular location on the display device and the particular RPPD metric corresponds to a particular portion of the visual XR content for display at the particular location on the display device: responsive to determining that the particular HPPD metric is greater than the RPPD metric, (i) applying the sharpening filter to the particular portion of the visual XR content if the particular HPPD metric is greater than the particular RPPD metric or (ii) applying the super-sampling filter to the particular portion of the visual XR content if the particular HPPD metric is less than the particular RPPD metric.

In some embodiments, applying the sharpening filter or the super-sampling filter to the visual XR content responsive to determining that the difference between the HPPD metric and the RPPD metric satisfies the minimum difference threshold substantially improves a quality of the visual XR content as compared to: forgoing applying the sharpening filter or the super-sampling filter to the visual XR content; or applying the sharpening filter or the super-sampling filter to the visual XR content responsive to a determination independent of the HPPD metric; wherein the quality of the visual XR content comprises a sharpness, a framerate, or an amount of adverse artifacts in the visual XR content.

In some embodiments, the one or more programs further include instructions for determining an amount of time until the XR device renders the visual XR content; and enhancing the visual XR content comprises: responsive to determining that the amount of time is sufficient for a high-quality enhancement, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the amount of time is insufficient for the high-quality enhancement but sufficient for a normal-quality enhancement, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, enhancing the visual XR content comprises: responsive to determining that the difference between the HPPD metric and the RPPD metric satisfies a secondary difference threshold that is greater than the minimum difference threshold, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the difference between the HPPD metric and the RPPD metric does not satisfy the secondary difference threshold, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, enhancing the visual XR content is further based on an amount of the visual XR content that will be displayed in a field of view of a user of the XR device; the XR application data identifies a location for displaying the visual XR content; and the one or more programs further include instructions for: determining the field of view of the user; and determining whether the amount of the visual XR content that will be displayed in the field of view of the user based on the location for displaying the visual XR content.

In some embodiments, enhancing the visual XR content is further based on (i) a distance between a user of the XR device and the visual XR content, (ii) a size of the visual XR content, and (ii) an angle between the user and the visual XR content; the XR application data identifies (i) a location for displaying the visual XR content, (ii) a two-dimensional (2D) surface for displaying a 2D image panel of the visual XR content, and (iii) the size of the visual XR content; the one or more programs further include instructions for (i) determining the distance based on the location for displaying the visual XR content and (ii) determining the angle based on the 2D surface for displaying the 2D image panel.

In some embodiments, enhancing the visual XR content is further based on (i) an activity level associated with the visual XR content and (ii) a priority level associated with the visual XR content; the XR application data identifies (i) interactions with the XR application by a user of the XR device and (ii) a relative priority of the visual XR content; and the one or more programs further include instructions for (i) determining the activity level based on the interactions with the XR application and (ii) determining the priority level based on the relative priority of the visual XR content.

In a second aspect of the invention, a computer-implemented method for dynamically enhancing visual XR content includes determining an HPPD metric for an XR device based on a characteristic of a display device of the XR device and a characteristic of a lens of the XR device. The method also includes receiving XR application data regarding visual XR content from an XR application running on the XR device. Additionally, the method includes determining an RPPD metric for the visual XR content based on the XR application data. Further, the method includes, responsive to determining that a difference between the HPPD metric and the RPPD metric satisfies a minimum difference threshold, enhancing the visual XR content based on the difference between the HPPD metric and the RPPD metric.

The computer implemented method of the second aspect of the invention is for example a method implemented on an XR device as herein described in accordance with the first aspect of the invention, and preferred features of the method will be understood by analogy. The method for example comprises the performance of any or all of the steps implemented by the instructions of the one or more programs described hereinabove.

For example, in some embodiments of the method, enhancing the visual XR content comprises (i) applying a sharpening filter to the visual XR content if the HPPD metric is greater than the RPPD metric or (ii) applying a super-sampling filter to the visual XR content if the HPPD metric is less than the RPPD metric.

In some embodiments, applying the sharpening filter or the super-sampling filter to the visual XR content responsive to determining that the difference between the HPPD metric and the RPPD metric satisfies the minimum difference threshold substantially improves a quality of the visual XR content as compared to: forgoing applying the sharpening filter or the super-sampling filter to the visual XR content; or applying the sharpening filter or the super-sampling filter to the visual XR content responsive to a determination independent of the HPPD metric; wherein the quality of the visual XR content comprises a sharpness, a framerate, or an amount of adverse artifacts in the visual XR content.

In some embodiments, the method further comprises determining an amount of time until the XR device renders the visual XR content; and enhancing the visual XR content comprises: responsive to determining that the amount of time is sufficient for a high-quality enhancement, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the amount of time is insufficient for the high-quality enhancement but sufficient for a normal-quality enhancement, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, enhancing the visual XR content comprises: responsive to determining that the difference between the HPPD metric and the RPPD metric satisfies a secondary difference threshold that is greater than the minimum difference threshold, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the difference between the HPPD metric and the RPPD metric does not satisfy the secondary difference threshold, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, the method further comprises: receiving additional XR application data regarding additional visual XR content from the XR application; determining an RPPD metric for the additional visual XR content based on the additional XR application data; and responsive to determining that a difference between the HPPD metric and the RPPD metric for the additional visual XR content satisfies the minimum difference threshold, (i) applying a sharpening filter to the additional visual XR content if the HPPD metric is greater than the RPPD metric for the additional visual XR content or (ii) applying a super-sampling filter to the additional visual XR content if the HPPD metric is less than the RPPD metric for the additional visual XR content.

In some embodiments, the method further comprises: determining a plurality of HPPD metrics for the XR device, wherein each HPPD metric of the plurality of HPPD metrics corresponds to a respective location on the display device; determining a plurality of RPPD metrics for the visual XR content, wherein each RPPD metric of the plurality of RPPD metrics corresponds to a respective portion of the visual XR content; and for each of the HPPD metrics of the plurality of HPPD metrics and for each of the RPPD metrics of the plurality of RPPD metrics: responsive to determining that a difference between a particular HPPD metric of the plurality of HPPD metrics and a particular RPPD metric of the plurality of RPPD metrics satisfies the minimum difference threshold, wherein the particular HPPD metric corresponds to a particular location on the display device and the particular RPPD metric corresponds to a particular portion of the visual XR content for display at the particular location on the display device: responsive to determining that the particular HPPD metric is greater than the RPPD metric, (i) applying the sharpening filter to the particular portion of the visual XR content if the particular HPPD metric is greater than the particular RPPD metric or (ii) applying the super-sampling filter to the particular portion of the visual XR content if the particular HPPD metric is less than the particular RPPD metric.

In some embodiments, applying the sharpening filter or the super-sampling filter to the visual XR content responsive to determining that the difference between the HPPD metric and the RPPD metric satisfies the minimum difference threshold substantially improves a quality of the visual XR content as compared to: forgoing applying the sharpening filter or the super-sampling filter to the visual XR content; or applying the sharpening filter or the super-sampling filter to the visual XR content responsive to a determination independent of the HPPD metric; wherein the quality of the visual XR content comprises a sharpness, a framerate, or an amount of adverse artifacts in the visual XR content.

In some embodiments, the method further comprises determining an amount of time until the XR device renders the visual XR content; and enhancing the visual XR content comprises: responsive to determining that the amount of time is sufficient for a high-quality enhancement, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the amount of time is insufficient for the high-quality enhancement but sufficient for a normal-quality enhancement, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, enhancing the visual XR content comprises: responsive to determining that the difference between the HPPD metric and the RPPD metric satisfies a secondary difference threshold that is greater than the minimum difference threshold, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the difference between the HPPD metric and the RPPD metric does not satisfy the secondary difference threshold, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, enhancing the visual XR content is further based on an amount of the visual XR content that will be displayed in a field of view of a user of the XR device; the XR application data identifies a location for displaying the visual XR content; and the one or more programs further include instructions for: determining the field of view of the user; and determining whether the amount of the visual XR content that will be displayed in the field of view of the user based on the location for displaying the visual XR content.

In some embodiments, enhancing the visual XR content is further based on (i) a distance between a user of the XR device and the visual XR content, (ii) a size of the visual XR content, and (ii) an angle between the user and the visual XR content; the XR application data identifies (i) a location for displaying the visual XR content, (ii) a two-dimensional (2D) surface for displaying a 2D image panel of the visual XR content, and (iii) the size of the visual XR content; the one or more programs further include instructions for (i) determining the distance based on the location for displaying the visual XR content and (ii) determining the angle based on the 2D surface for displaying the 2D image panel.

In some embodiments, enhancing the visual XR content is further based on (i) an activity level associated with the visual XR content and (ii) a priority level associated with the visual XR content; the XR application data identifies (i) interactions with the XR application by a user of the XR device and (ii) a relative priority of the visual XR content; and the one or more programs further include instructions for (i) determining the activity level based on the interactions with the XR application and (ii) determining the priority level based on the relative priority of the visual XR content.

**In** a third aspect of the invention, a non-transitory, computer-readable storage medium stores instructions that, when executed by one or more processors of an XR device that includes a display device and a lens, cause the XR device to perform operations. The operations include determining an HPPD metric for the XR device based on a characteristic of the display device and a characteristic of the lens. The operations also include receiving XR application data regarding visual XR content from an XR application running on the XR device. Additionally, the operations include determining an RPPD metric for the visual XR content based on the XR application data. Further, the operations include, responsive to determining that a difference between the HPPD metric and the RPPD metric satisfies a minimum difference threshold, enhancing the visual XR content based on the difference between the HPPD metric and the RPPD metric.

The medium of the third aspect of the invention for example stores instructions that, when executed by one or more processors of an XR device that includes a display device and a lens, cause the XR device to perform the method of the second aspect of the invention and thereby to comprise an XR device as herein described in accordance with the first aspect of the invention, and preferred features will be understood by analogy. The instructions for example comprise the performance of any or all of the steps implemented by the instructions of the one or more programs described in respect of the first aspect of the invention.

For example, in some embodiments, the non-transitory, computer-readable storage medium stores instructions that, when executed by the one or more processors of the XR device, further cause the XR device to enhance the visual XR content by (i) applying a sharpening filter to the visual XR content if the HPPD metric is greater than the RPPD metric or (ii) applying a super-sampling filter to the visual XR content if the HPPD metric is less than the RPPD metric.

In some embodiments, the instructions, when executed by the one or more processors of the XR device, further cause the XR device to perform operations including: receiving additional XR application data regarding additional visual XR content from the XR application; determining an RPPD metric for the additional visual XR content based on the additional XR application data; and responsive to determining that a difference between the HPPD metric and the RPPD metric for the additional visual XR content satisfies the minimum difference threshold, (i) applying a sharpening filter to the additional visual XR content if the HPPD metric is greater than the RPPD metric for the additional visual XR content or (ii) applying a super-sampling filter to the additional visual XR content if the HPPD metric is less than the RPPD metric for the additional visual XR content.

In some embodiments, the instructions, when executed by the one or more processors of the XR device, further cause the XR device to perform operations including: determining an amount of time until the XR device renders the visual XR content; and enhancing the visual XR content comprises: responsive to determining that the amount of time is sufficient for a high-quality enhancement, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the amount of time is insufficient for the high-quality enhancement but sufficient for a normal-quality enhancement, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

In some embodiments, by the one or more processors of the XR device, further cause the XR device to enhance the visual XR content comprises: responsive to determining that the difference between the HPPD metric and the RPPD metric satisfies a secondary difference threshold that is greater than the minimum difference threshold, (i) applying a high-quality sharpening filter to the visual XR content if the HPPD metric is greater than the RPPD metric or (ii) applying a high-quality super-sampling filter to the visual XR content if the HPPD metric is less than the RPPD metric; or responsive to determining that the difference between the HPPD metric and the RPPD metric does not satisfy the secondary difference threshold, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes. Having summarized the above example aspects, a brief description of the drawings will now be presented.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates an example of visual XR content that includes a UI panel, in accordance with some embodiments.
Figures 2A-2B illustrate an example of visual XR content that includes fine details, in accordance with some embodiments.
Figures 3A-3C illustrate various rendering scenarios that involve, respectively, magnification, minification, and direct mapping, in accordance with some embodiments.
Figure 4A illustrates a flow diagram of a method for dynamically enhancing visual XR content, in accordance with some embodiments. Additionally, Figure 4B illustrates an example XR system for implementation of the method of Figure 4A, in accordance with some embodiments.
Figures 5A-5C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

In some embodiments, XR content can include completely generated content or generated content combined with captured (e.g., real-world) content. The XR content can include video, audio, haptic events, or some combination thereof, any of which can be presented in a single channel or in multiple channels (such as stereo video that produces a 3D effect to a viewer). Additionally, in some embodiments, XR can also be associated with applications, products, accessories, services, or some combination thereof, which are used, for example, to create content in an XR and/or are otherwise used in (e.g., to perform activities in) an XR.

The proper rendering of visual XR content plays a key role in improving user immersion in an XR environment. This is especially true, for example, for visual XR content that includes fine details such as text. As in the real world, users expect the content to scale and skew in accordance with their position and perspective with respect to it (e.g., increasing in size and clarity as users approach said content). The following figures shed light on the difficulty of properly presenting visual XR content and provide various potential solutions to the problems posed by these difficulties.

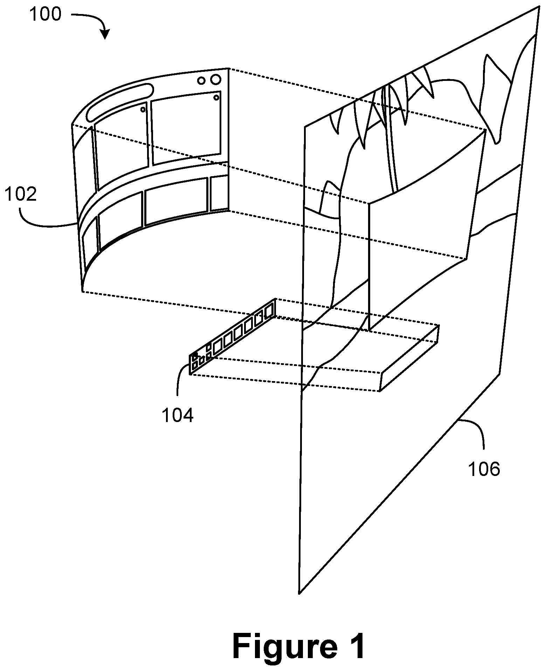

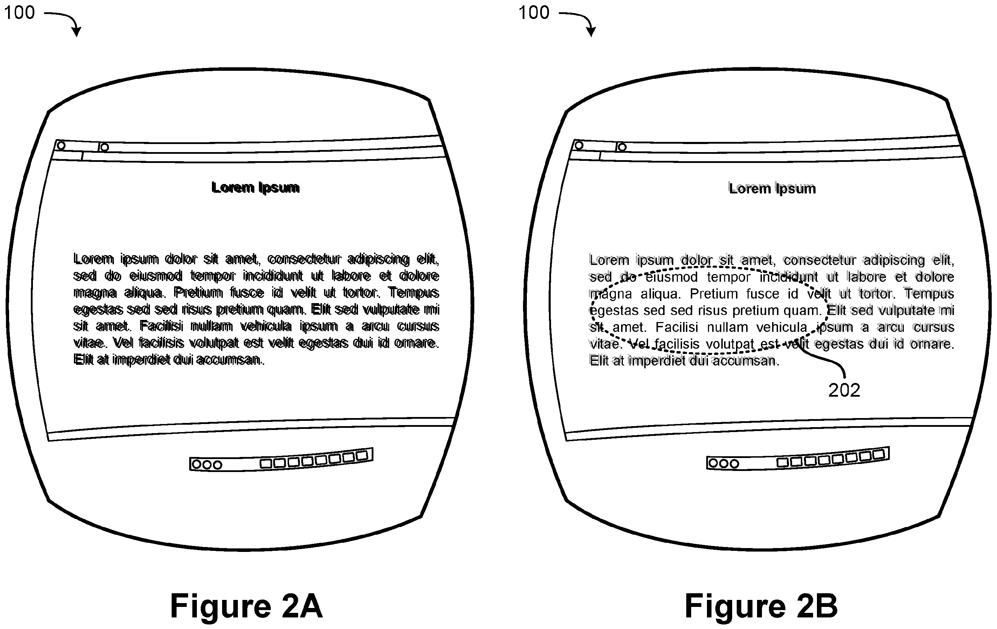

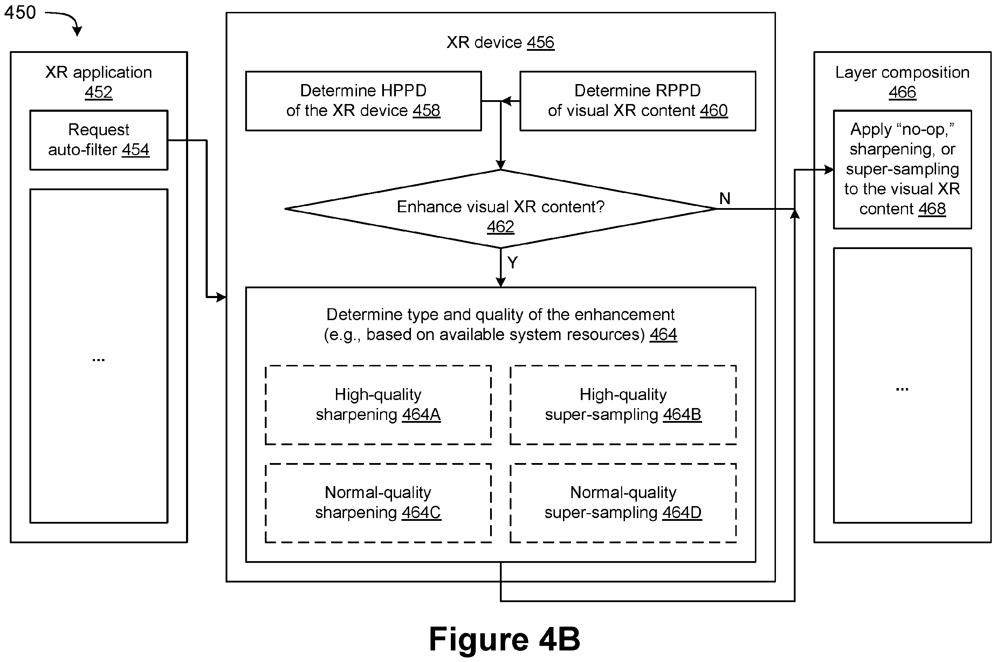

Figure 1 illustrates an example of visual XR content 100 that includes a UI panel 102, in accordance with some embodiments. The visual XR content 100 includes a toolbar 104 and a background image 106. Additionally, the visual XR content may include text or other fine details that ought to be presented clearly to a user of the XR device displaying the content 100 (e.g., XR device 456 of Figure 4B). This is discussed in more detail below with respect to Figures 2A-2B.

Generally, XR textures (e.g., a 2D image) are rendered into one or more eye buffers (e.g., left- and right-eye buffers). The XR textures, for example, may be images that correspond to the left and right eyes of the user. Accordingly, the XR textures may need to be geometrically transformed prior to being rendered into an eye buffer. The one or more eye buffers may have a standard perspective transform that roughly corresponds to the field of view of the XR device. The XR textures are sampled twice - once by an XR application (e.g., XR application 452, below) to create the eye buffers and again at timewarp. This repeated sampling can lead to sampling artifacts (e.g., poor sharpness or contrast, flickering, tearing) that may be exacerbated due to the user's changing perspective (e.g., due to head movement). Application developers can prevent this double aliasing problem by submitting an XR texture as a separate layer called a panel, such as the UI panel 102 of Figure 1.

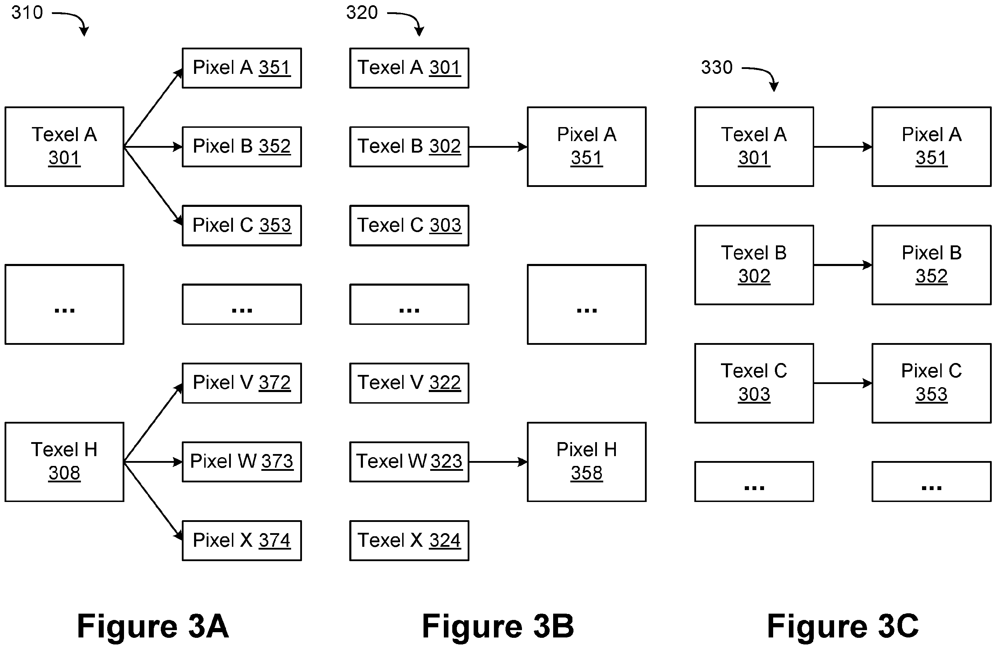

The XR images presented to each eye of the user of the XR device are generated by sampling from the UI panel 102 and any additional layers (e.g., toolbar 104). These images are presented to the user while still compensating for head movement, lens distortion, and/or other corrections necessary for the XR device's display and/or optics for the panel to appear correctly in the XR environment. The quality of the UI panel 102 may be impacted, for example, when the UI panel 102 undergoes magnification or minification from the texture output by the XR application to the corresponding region of each eye's display. This is discussed in more detail with respect to Figures 3A-3C.

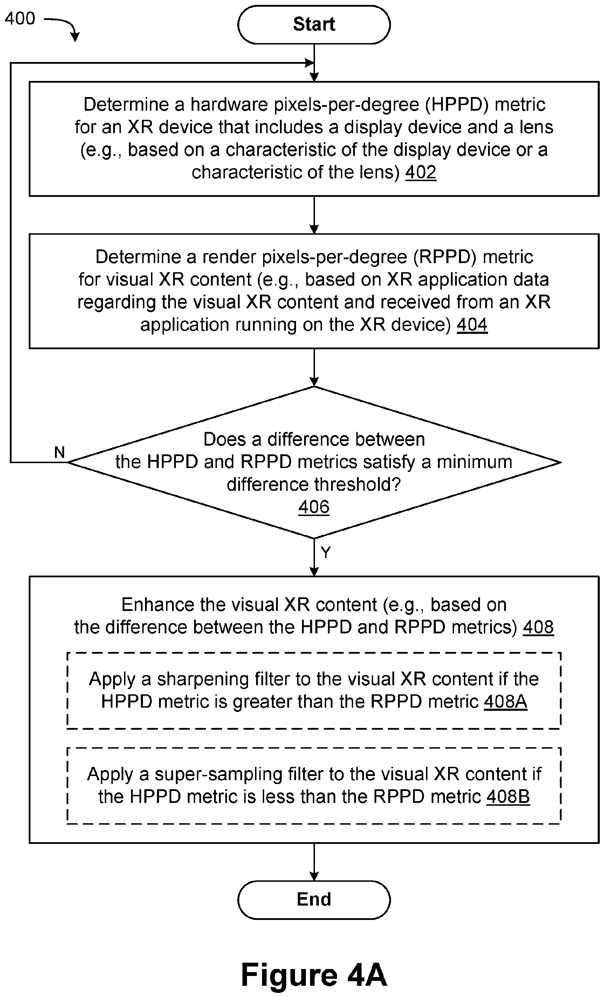

Figures 2A-2B illustrate an example of visual XR content 100 that includes fine details, in accordance with some embodiments. As illustrated in Figure 2A, the text of the visual XR content 100 is nearly illegible. This may be due to poor or improper enhancement of the visual XR content 100, as well as any of the other difficulties discussed above with respect to rendering visual XR content and properly accounting for changing user perspectives. By contrast, the text of Figure 2B is significantly clearer. This clarity is accomplished by implementation of the innovations described herein, such as the method discussed with respect to Figures 4A-4B.

As illustrated in Figure 2B, the text is clearest in region 202 and slightly less clear outside of the region 202. Accordingly, in some embodiments, the visual XR content 100 is enhanced selectively. For example, after determining where the user is currently focused (e.g., at region 202), the visual XR content 100 can then be enhanced to ensure clarity within that region is maximized (and clarity without is improved to a lesser degree if at all). This selective enhancement may prove especially useful for XR devices with limited computational capabilities that are unable to indiscriminately enhance all content currently on display.

Figures 3A-3C illustrate various rendering scenarios that involve, respectively, magnification, minification, and direct mapping, in accordance with some embodiments. Arrows between texels and pixels (e.g., between texel 301 and pixel 351) indicate the texel values that are used to generate the pixel values. For simplicity, Figures 3A-3C illustrate nearest neighbor interpolation where each pixel value is copied from a single texel value that most closely corresponds to the sampling location. One skilled in the art could extrapolate this description to other interpolation methods such as bilinear or bicubic as well as 2 dimensions for images even though 1 dimension is illustrated. In the magnification scenario 310 of Figure 3A, the XR device maps a single texel 301 to multiple pixels 351-353. This interpolation may cause a panel (e.g., UI panel 102) to appear blurry, which can be especially problematic for text clarity. In this scenario 310, sharpening can improve the clarity of the rendered image. On the other hand, in the minification scenario 320 of Figure 3B, information is lost for nearest neighbor interpolation as multiple texels are not used to generate the pixels (e.g., texels 301, 303, 322, and 324). For other interpolation techniques such as bilinear or bicubic, multiple texels can be mapped to a single pixel (also resulting in information loss). This undersampling may cause the panel to flicker due to aliasing, or it may require additional processing - which costs the XR device precious computational and memory resources. In this scenario 320, super-sampling (e.g., mipmapping) can be used to reduce or eliminate the flickering.

Whether rendering requires magnification or minification is largely dependent on pixel density, which can be expressed in terms of two pixels-per-degree (PPD) metrics - render PPD ("RPPD") and the aforenoted HPPD metric. As used herein, *RPPD* refers to the separation of pixels of an XR texture when the texture is placed in the XR world, as seen by a virtual camera at the user's location. When a virtual camera or eye is placed at the user's location, the pitch between adjacent texture pixels if placed across the virtual object approximately placed in the virtual scene measured in viewing angle can be scaled appropriately to yield the RPPD metric. Since this value may vary across the surface of a virtual object, in some embodiments, the RPPD metric is the average RPPD across the entire surface of the virtual object. Alternatively, in some embodiments, the RPPD metric is the RPPD metric as measured at a central point of the virtual object, a corner(s) or edge(s) of the virtual object, a location on the virtual object at which the user's gaze is directed, or an input location of a controller or gesture. The RPPD for a given panel may depend, for example, on the panel field of view, the panel resolution, a viewing distance between the user and the panel, the size of the panel, and/or the angle between the panel and the user. The pixels of the panel are spread out over a virtual surface that subtends a field of view based on the size of the surface and the position of the surface relative to the user.

As noted above, HPPD refers to the inherent separation of pixels of the display of an XR device as observed by the user of an XR device. The HPPD is fixed by the hardware of the XR device. Although HPPD may vary across the field of view, it is more important near the user's forward gaze where the user is likely most comfortable (e.g., as opposed to at the periphery of the XR device's display). Accordingly, in some embodiments, HPPD can be a fixed value for the XR device (e.g., as determined at the user's forward gaze). However, in some embodiments, HPPD is a metric that varies based on a distance from the user's forward gaze. For a given XR device, HPPD may depend, for example, on fill factor, lens blur, subpixel structure, and/or the resolution of the display and/or the lens of the XR device.

As illustrated in the rendering scenario 330 of Figure 3C, when individual texels 301-303 can be mapped approximately to pixels 351-353, rendering requires no magnification or minification. This occurs when the RPPD is equal to the HPPD, and it results in a clearer, flicker-free image for the user of the XR device. Accordingly, in scenarios where the HPPD is equal to the RPPD, no enhancement (e.g., sharpening, super-sampling) of visual XR content may be necessary prior to rendering the content for display by an XR device.

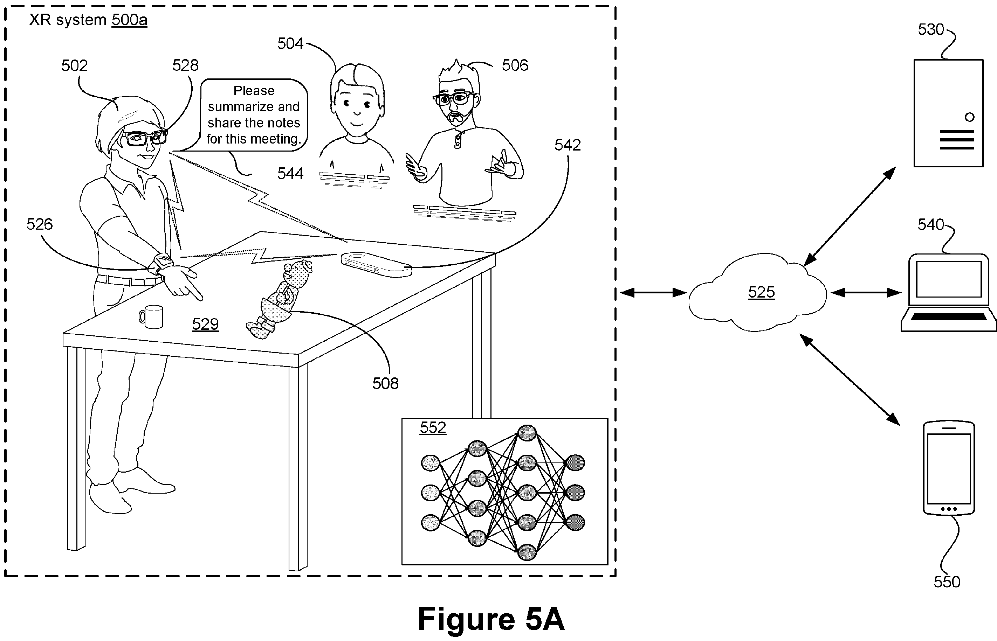

Figure 4A illustrates a flow diagram of a method for dynamically enhancing visual XR content (e.g., displayed at AR device 528 and/or an MR device 532; Figures 5A-5C-2), in accordance with some embodiments. Operations (e.g., steps) of the method 400 can be performed by one or more processors (e.g., central processing unit and/or MCU) of a system (e.g., CR systems 500a-500c). At least some of the operations shown in Figure 4A correspond to instructions stored in a computer memory or computer-readable storage medium (e.g., storage, RAM, and/or memory). Operations of the method 400 can be performed by a single device alone or in conjunction with one or more processors and/or hardware components of another communicatively coupled device (e.g., a wrist-wearable device 526, a HIPD 542, and/or any other device described below in reference to Figures 5A-5C-2) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device, but should not be construed as limiting the performance of the operation to the particular device in all embodiments.

(A1) Figure 4 shows a flow chart of a method 400 for dynamically enhancing visual XR content, in accordance with some embodiments. The method 400 can occur at the aforenoted XR device, which includes a display device (e.g., an LED display, an OLED display, a projector display) and a lens. In the illustrated embodiment, the method 400 includes determining (402) an HPPD metric for the XR device. The HPPD metric may be based on, for example, a characteristic of the display device (e.g., an amount of separation between pixels of the display device as observed by a user wearing the XR device) or a characteristic of the lens. The method 400 also includes determining (404) an RPPD metric for visual XR content (e.g., visual XR content 100). For example, the RPPD metric may be based on XR application data regarding the visual XR content and received from an XR application (e.g., XR application 452, below) running on the XR device. The XR application data may include, for example, a size of the visual XR content and/or a location of the visual XR content. Additionally, the method 400 includes determining 406 whether a difference between the HPPD and RPPD metrics satisfies a minimum difference threshold (e.g., 1%, 2%, or 5%). If the difference does not satisfy the threshold, then the method includes redetermining the HPPD metric and/or the RPPD metric (e.g., at a future time after one or both of the metrics have changed significantly). However, if the difference between the HPPD and RPPD metrics does satisfy the minimum difference threshold, then the method includes enhancing (408) the visual XR content (e.g., based on the difference between the HPPD and RPPD metrics).

(A2) In some embodiments of A1, enhancing the visual XR content includes applying (408A) a sharpening filter to the visual XR content if the HPPD metric is greater than the RPPD metric or applying (408B) a super-sampling filter to the visual XR content if the HPPD metric is less than the RPPD metric.

(A3) In some embodiments of A1-A2, the one or more programs include additional instructions for (i) receiving additional XR application data regarding additional visual XR content from the XR application, (ii) determining an RPPD metric for the additional visual XR content based on the additional XR application data, and (iii) responsive to determining that a difference between the HPPD metric and the RPPD metric for the additional visual XR content satisfies the minimum difference threshold, applying a sharpening filter to the additional visual XR content if the HPPD metric is greater than the RPPD metric for the additional visual XR content or applying a super-sampling filter to the additional visual XR content if the HPPD metric is less than the RPPD metric for the additional visual XR content.

(A4) In some embodiments of A1-A3, the one or more programs include additional instructions for determining an amount of time until the XR device renders the visual XR content, where enhancing the visual XR content includes (i) responsive to determining that the amount of time is sufficient for a high-quality enhancement, applying a high-quality sharpening filter to the visual XR content if the HPPD metric is greater than the RPPD metric or applying a high-quality super-sampling filter to the visual XR content if the HPPD metric is less than the RPPD metric or (ii) responsive to determining that the amount of time is insufficient for the high-quality enhancement but sufficient for a normal-quality enhancement, applying a normal-quality sharpening filter to the visual XR content if the HPPD metric is greater than the RPPD metric or applying a normal-quality super-sampling filter to the visual XR content if the HPPD metric is less than the RPPD metric.

(A5) In some embodiments of A1-A4, enhancing the visual XR content includes (i) responsive to determining that the difference between the HPPD metric and the RPPD metric satisfies a secondary difference threshold that is greater than the minimum difference threshold, applying a high-quality sharpening filter to the visual XR content if the HPPD metric is greater than the RPPD metric or applying a high-quality super-sampling filter to the visual XR content if the HPPD metric is less than the RPPD metric or (ii) responsive to determining that the difference between the HPPD metric and the RPPD metric does not satisfy the secondary difference threshold, applying a normal-quality sharpening filter to the visual XR content if the HPPD metric is greater than the RPPD metric or applying a normal-quality super-sampling filter to the visual XR content if the HPPD metric is less than the RPPD metric.

(A6) In some embodiments of A1-A5, enhancing the visual XR content is further based on an amount of the visual XR content that will be displayed in a field of view of a user of the XR device, where the XR application data identifies a location for displaying the visual XR content, and the one or more programs further include instructions for (i) determining the field of view of the user and (ii) determining whether the amount of the visual XR content that will be displayed in the field of view of the user based on the location for displaying the visual XR content.

(A7) In some embodiments of A1-A6, enhancing the visual XR content is further based on a distance between a user of the XR device and the visual XR content, a size of the visual XR content, and an angle between the user and the visual XR content, where the XR application data identifies a location for displaying the visual XR content, a 2D surface (e.g., a flat surface, a surface on a sphere, or a surface on a cylinder) for displaying a 2D image panel of the visual XR content, and the size of the visual XR content, and the one or more programs further include instructions for (i) determining the distance based on the location for displaying the visual XR content and (ii) determining the angle based on the 2D surface for displaying the 2D image panel.

(A8) In some embodiments of A1-A7, enhancing the visual XR content is further based on an activity level associated with the visual XR content and a priority level associated with the visual XR content, where the XR application data identifies interactions with the XR application by a user of the XR device and a relative priority of the visual XR content (e.g., as compared to other visual XR content), and the one or more programs further include instructions for (i) determining the activity level based on the interactions with the XR application and (ii) determining the priority level based on the relative priority of the visual XR content.

(A9) In some embodiments of A2-A8, the one or more programs include additional instructions for determining a plurality of HPPD metrics for the XR device, where each HPPD metric of the plurality of HPPD metrics corresponds to a respective location on the display device. The one or more programs may also include instructions for determining a plurality of RPPD metrics for the visual XR content, where each RPPD metric of the plurality of RPPD metrics corresponds to a respective portion of the visual XR content. Additionally, the one or more programs may include instructions for, for each of the HPPD metrics of the plurality of HPPD metrics and for each of the RPPD metrics of the plurality of RPPD metrics, responsive to determining (i) that a difference between a particular HPPD metric of the plurality of HPPD metrics and a particular RPPD metric of the plurality of RPPD metrics satisfies the minimum difference threshold, where the particular HPPD metric corresponds to a particular location on the display device and the particular RPPD metric corresponds to a particular portion of the visual XR content for display at the particular location on the display device and (ii) that the particular HPPD metric is greater than the RPPD metric: applying the sharpening filter to the particular portion of the visual XR content if the particular HPPD metric is greater than the particular RPPD metric or applying the super-sampling filter to the particular portion of the visual XR content if the particular HPPD metric is less than the particular RPPD metric.

(A10) In some embodiments of A2-A9, applying the sharpening filter or the super-sampling filter to the visual XR content - responsive to determining that the difference between the HPPD metric and the RPPD metric satisfies the minimum difference threshold - substantially improves a quality of the visual XR content as compared to (i) forgoing applying the sharpening filter or the super-sampling filter to the visual XR content (ii) applying the sharpening filter or the super-sampling filter to the visual XR content responsive to a determination independent of the HPPD metric. The quality of the visual XR content may include a sharpness, a framerate, or an amount of adverse artifacts in the visual XR content.

(B1) In accordance with some embodiments, an XR device includes a display device, a lens, and one or more programs. The one or more programs are stored in memory and configured to be executed by one or more processors. Moreover, the one or more programs include instructions for performing operations corresponding to any of A1-A10.

(C1) In accordance with some embodiments, a non-transitory computer readable storage medium includes instructions that, when executed by a computing device in communication with an XR headset, cause the computer device to perform operations corresponding to any of A1-A10.

(D1) In accordance with some embodiments, a method of operating an XR headset, including operations that correspond to any of A1-A10.

(E1) In accordance with some embodiments, a method of manufacturing an XR device includes providing a display device, a lens, and one or more programs. The one or more programs are stored in memory and configured to be executed by one or more processors. Moreover, the one or more programs include instructions for performing operations corresponding to A1-A10.

Figure 4B illustrates an example XR system 450 for implementation of the method 400 of Figure 4A, in accordance with some embodiments. The XR system 450 illustrates interactions between an XR application 452 and an XR device 456. (Note, in some implementations, the XR application 452 runs on the XR device 456.) It is noted that, in some embodiments, there is a distinct separation between the XR application 452 and the XR device 456 (e.g., runtime). For example, the application may have minimal complexity and knowledge (e.g., regarding HPPD or RPPD) in comparison to the XR device 456 as a whole. Additionally, the XR system 450 illustrates layer composition 466, which may involve application of an enhancement to visual XR content. This layer composition 466 can be performed directly by the XR device 456 and/or by the XR application 452.

In the first illustrated embodiment, the XR application 452 requests (454) auto-filtration of visual XR content (e.g., visual XR content 100). In some embodiments, this is a feature that XR application developers can opt into. The request indicates to the XR device 456 that it should enhance the visual XR content if necessary. In some embodiments, the request is included with visual XR content sent from the XR application 452 to the XR device 456 for rendering.

The XR device determines 458 an HPPD metric for the XR device and determines 460 an RPPD metric for the visual XR content, as discussed above with respect to steps 402 and 404 of the method 400 discussed above. Additionally, the XR device 456 determines whether to enhance the visual XR content. This determination may involve determining whether the difference between the HPPD and RPPD metrics warrants enhancement (see step 406 of Figure 4A), however it may also account for other factors - such as the amount of time until the next vertical synchronization, the amount of available computational resources (e.g., memory), the target location for displaying the visual XR content with respect to the user, and so on.

In the event the XR device 456 determines that the visual XR content should not be enhanced, no operation (a "no-op") is performed 468 at layer composition 466 and the visual XR content is then rendered for display by the XR device. However, if the XR device 456 determines that the visual XR content should be enhanced, then the XR device 456 will also determine 464 how the content should be enhanced and to what extent. For example, as illustrated in Figure 4B, enhancement may include application 464A of a high-quality sharpening filter, application 464B of a high-quality super-sampling filter, application 464C of a normal-quality sharpening filter, or application 464D of a normal-quality super-sampling filter. As noted with respect to Figure 2B, this determination may vary for different portions of the same visual XR content (e.g., based on where the user is looking). Other factors relevant to this determination are discussed above with respect to method 400 (see, e.g., A4-A8).

The devices described above are further detailed below, including headset devices. Specific operations described above may occur as a result of specific hardware, and such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

The techniques described above in Figures 5A-5C can be used with different head-wearable devices. In some embodiments, the head-wearable devices (e.g., the AR device 500 and/or the VR device 510) can be used in conjunction with one or more wearable devices such as a wrist-wearable device (or components thereof).

### Example Extended-Reality Systems

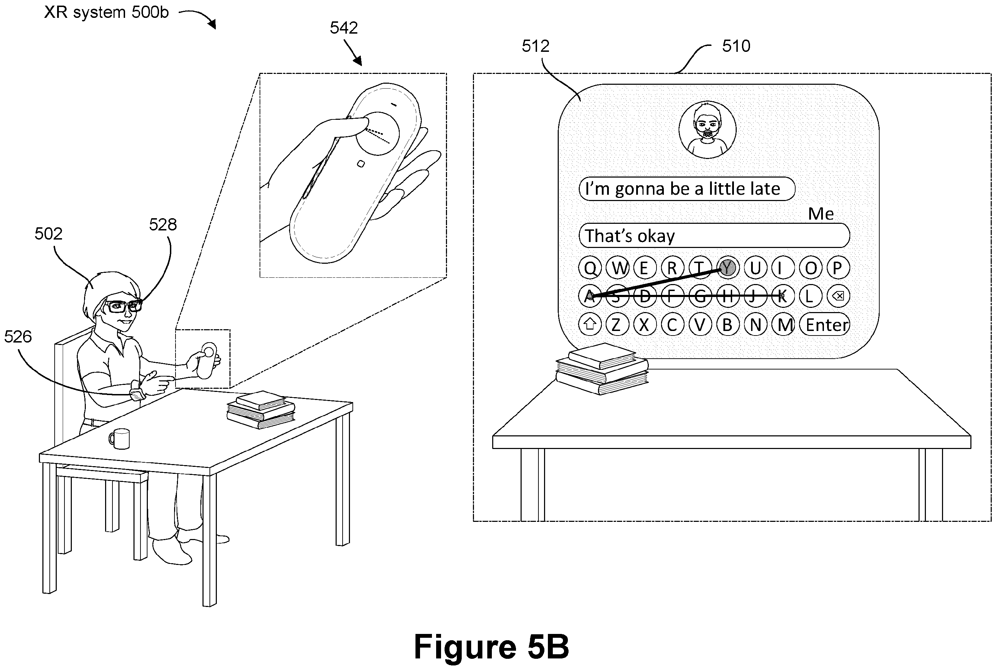

Figures 5A 5B, 5C-1, and 5C-2, illustrate example XR systems that include AR and MR systems, in accordance with some embodiments. Figure 5A shows a first XR system 500a and first example user interactions using a wrist-wearable device 526, a head-wearable device (e.g., AR device 528), and/or a HIPD 542. Figure 5B shows a second XR system 500b and second example user interactions using a wrist-wearable device 526, AR device 528, and/or an HIPD 542. Figures 5C-1 and 5C-2 show a third MR system 500c and third example user interactions using a wrist-wearable device 526, a head-wearable device (e.g., an MR device such as a VR device), and/or an HIPD 542. As the skilled artisan will appreciate upon reading the descriptions provided herein, the above-example AR and MR systems (described in detail below) can perform various functions and/or operations.

The wrist-wearable device 526, the head-wearable devices, and/or the HIPD 542 can communicatively couple via a network 525 (e.g., cellular, near field, Wi-Fi, personal area network, wireless LAN). Additionally, the wrist-wearable device 526, the head-wearable device, and/or the HIPD 542 can also communicatively couple with one or more servers 530, computers 540 (e.g., laptops, computers), mobile devices 550 (e.g., smartphones, tablets), and/or other electronic devices via the network 525 (e.g., cellular, near field, Wi-Fi, personal area network, wireless LAN). Similarly, a smart textile-based garment, when used, can also communicatively couple with the wrist-wearable device 526, the head-wearable device(s), the HIPD 542, the one or more servers 530, the computers 540, the mobile devices 550, and/or other electronic devices via the network 525 to provide inputs.

Turning to Figure 5A, a user 502 is shown wearing the wrist-wearable device 526 and the AR device 528 and having the HIPD 542 on their desk. The wrist-wearable device 526, the AR device 528, and the HIPD 542 facilitate user interaction with an AR environment. In particular, as shown by the first AR system 500a, the wrist-wearable device 526, the AR device 528, and/or the HIPD 542 cause presentation of one or more avatars 504, digital representations of contacts 506, and virtual objects 508. As discussed below, the user 502 can interact with the one or more avatars 504, digital representations of the contacts 506, and virtual objects 508 via the wrist-wearable device 526, the AR device 528, and/or the HIPD 542. In addition, the user 502 is also able to directly view physical objects in the environment, such as a physical table 529, through transparent lens(es) and waveguide(s) of the AR device 528. Alternatively, an MR device could be used in place of the AR device 528 and a similar user experience can take place, but the user would not be directly viewing physical objects in the environment, such as table 529, and would instead be presented with a virtual reconstruction of the table 529 produced from one or more sensors of the MR device (e.g., an outward facing camera capable of recording the surrounding environment).

The user 502 can use any of the wrist-wearable device 526, the AR device 528 (e.g., through physical inputs at the AR device and/or built-in motion tracking of a user's extremities), a smart-textile garment, externally mounted extremity tracking device, the HIPD 542 to provide user inputs, etc. For example, the user 502 can perform one or more hand gestures that are detected by the wrist-wearable device 526 (e.g., using one or more EMG sensors and/or IMUs built into the wrist-wearable device) and/or AR device 528 (e.g., using one or more image sensors or cameras) to provide a user input. Alternatively, or additionally, the user 502 can provide a user input via one or more touch surfaces of the wrist-wearable device 526, the AR device 528, and/or the HIPD 542, and/or voice commands captured by a microphone of the wrist-wearable device 526, the AR device 528, and/or the HIPD 542. The wrist-wearable device 526, the AR device 528, and/or the HIPD 542 include an artificially intelligent digital assistant to help the user in providing a user input (e.g., completing a sequence of operations, suggesting different operations or commands, providing reminders, confirming a command). For example, the digital assistant can be invoked through an input occurring at the AR device 528 (e.g., via an input at a temple arm of the AR device 528). In some embodiments, the user 502 can provide a user input via one or more facial gestures and/or facial expressions. For example, cameras of the wrist-wearable device 526, the AR device 528, and/or the HIPD 542 can track the user 502's eyes for navigating a user interface.

The wrist-wearable device 526, the AR device 528, and/or the HIPD 542 can operate alone or in conjunction to allow the user 502 to interact with the AR environment. In some embodiments, the HIPD 542 is configured to operate as a central hub or control center for the wrist-wearable device 526, the AR device 528, and/or another communicatively coupled device. For example, the user 502 can provide an input to interact with the AR environment at any of the wrist-wearable device 526, the AR device 528, and/or the HIPD 542, and the HIPD 542 can identify one or more back-end and front-end tasks to cause the performance of the requested interaction and distribute instructions to cause the performance of the one or more back-end and front-end tasks at the wrist-wearable device 526, the AR device 528, and/or the HIPD 542. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 542 can perform the back-end tasks and provide the wrist-wearable device 526 and/or the AR device 528 operational data corresponding to the performed back-end tasks such that the wrist-wearable device 526 and/or the AR device 528 can perform the front-end tasks. In this way, the HIPD 542, which has more computational resources and greater thermal headroom than the wrist-wearable device 526 and/or the AR device 528, performs computationally intensive tasks and reduces the computer resource utilization and/or power usage of the wrist-wearable device 526 and/or the AR device 528.

In the example shown by the first AR system 500a, the HIPD 542 identifies one or more back-end tasks and front-end tasks associated with a user request to initiate an AR video call with one or more other users (represented by the avatar 504 and the digital representation of the contact 506) and distributes instructions to cause the performance of the one or more back-end tasks and front-end tasks. In particular, the HIPD 542 performs back-end tasks for processing and/or rendering image data (and other data) associated with the AR video call and provides operational data associated with the performed back-end tasks to the AR device 528 such that the AR device 528 performs front-end tasks for presenting the AR video call (e.g., presenting the avatar 504 and the digital representation of the contact 506).

In some embodiments, the HIPD 542 can operate as a focal or anchor point for causing the presentation of information. This allows the user 502 to be generally aware of where information is presented. For example, as shown in the first AR system 500a, the avatar 504 and the digital representation of the contact 506 are presented above the HIPD 542. In particular, the HIPD 542 and the AR device 528 operate in conjunction to determine a location for presenting the avatar 504 and the digital representation of the contact 506. In some embodiments, information can be presented within a predetermined distance from the HIPD 542 (e.g., within five meters). For example, as shown in the first AR system 500a, virtual object 508 is presented on the desk some distance from the HIPD 542. Similar to the above example, the HIPD 542 and the AR device 528 can operate in conjunction to determine a location for presenting the virtual object 508. Alternatively, in some embodiments, presentation of information is not bound by the HIPD 542. More specifically, the avatar 504, the digital representation of the contact 506, and the virtual object 508 do not have to be presented within a predetermined distance of the HIPD 542. While an AR device 528 is described working with an HIPD, an MR headset can be interacted with in the same way as the AR device 528.

User inputs provided at the wrist-wearable device 526, the AR device 528, and/or the HIPD 542 are coordinated such that the user can use any device to initiate, continue, and/or complete an operation. For example, the user 502 can provide a user input to the AR device 528 to cause the AR device 528 to present the virtual object 508 and, while the virtual object 508 is presented by the AR device 528, the user 502 can provide one or more hand gestures via the wrist-wearable device 526 to interact and/or manipulate the virtual object 508. While an AR device 528 is described working with a wrist-wearable device 526, an MR headset can be interacted with in the same way as the AR device 528.

### Integration of Artificial Intelligence with XR Systems

Figure 5A illustrates an interaction in which an artificially intelligent virtual assistant can assist in requests made by a user 502. The AI virtual assistant can be used to complete open-ended requests made through natural language inputs by a user 502. For example, in Figure 5A the user 502 makes an audible request 544 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 5A also illustrates an example neural network 552 used in Artificial Intelligence applications. Uses of Artificial Intelligence (AI) are varied and encompass many different aspects of the devices and systems described herein. AI capabilities cover a diverse range of applications and deepen interactions between the user 502 and user devices (e.g., the AR device 528, an MR device 532, the HIPD 542, the wrist-wearable device 526). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 502 can interact with an AI model through natural language inputs captured by a voice sensor, text inputs, or any other input modality that accepts natural language and/or a corresponding voice sensor module. In another instance, input is provided by tracking the eye gaze of a user 502 via a gaze tracker module. Additionally, the AI model can also receive inputs beyond those supplied by a user 502. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 528) or from multiple devices that are in communication with each other (e.g., a system that includes at least two of an AR device 528, an MR device 532, the HIPD 542, the wrist-wearable device 526, etc.). The AI model can also access additional information (e.g., one or more servers 530, the computers 540, the mobile devices 550, and/or other electronic devices) via a network 525.

A non-limiting list of AI-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, AI-enhanced functions are fully or partially executed on cloud-computing platforms communicatively coupled to the user devices (e.g., the AR device 528, an MR device 532, the HIPD 542, the wrist-wearable device 526) via the one or more networks. The cloud-computing platforms provide scalable computing resources, distributed computing, managed AI services, interference acceleration, pre-trained models, APIs and/or other resources to support comprehensive computations required by the AI-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 528, an MR device 532, the HIPD 542, the wrist-wearable device 526), storage options of the external devices (servers, computers, mobile devices, etc.), and/or storage options of the cloud-computing platforms.

The AI-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 542), haptic feedback can provide information to the user 502. An AI model can also use the inputs described above to determine the appropriate modality and device(s) to present content to the user (e.g., a user walking on a busy road can be presented with an audio output instead of a visual output to avoid distracting the user 502).

### Example Augmented Reality Interaction

Figure 5B shows the user 502 wearing the wrist-wearable device 526 and the AR device 528 and holding the HIPD 542. In the second AR system 500b, the wrist-wearable device 526, the AR device 528, and/or the HIPD 542 are used to receive and/or provide one or more messages to a contact of the user 502. In particular, the wrist-wearable device 526, the AR device 528, and/or the HIPD 542 detect and coordinate one or more user inputs to initiate a messaging application and prepare a response to a received message via the messaging application.

In some embodiments, the user 502 initiates, via a user input, an application on the wrist-wearable device 526, the AR device 528, and/or the HIPD 542 that causes the application to initiate on at least one device. For example, in the second AR system 500b the user 502 performs a hand gesture associated with a command for initiating a messaging application (represented by messaging user interface 512); the wrist-wearable device 526 detects the hand gesture; and, based on a determination that the user 502 is wearing the AR device 528, causes the AR device 528 to present a messaging user interface 512 of the messaging application. The AR device 528 can present the messaging user interface 512 to the user 502 via its display (e.g., as shown by user 502's field of view 510). In some embodiments, the application is initiated and can be run on the device (e.g., the wrist-wearable device 526, the AR device 528, and/or the HIPD 542) that detects the user input to initiate the application, and the device provides another device operational data to cause the presentation of the messaging application. For example, the wrist-wearable device 526 can detect the user input to initiate a messaging application, initiate and run the messaging application, and provide operational data to the AR device 528 and/or the HIPD 542 to cause presentation of the messaging application. Alternatively, the application can be initiated and run at a device other than the device that detected the user input. For example, the wrist-wearable device 526 can detect the hand gesture associated with initiating the messaging application and cause the HIPD 542 to run the messaging application and coordinate the presentation of the messaging application.

Further, the user 502 can provide a user input provided at the wrist-wearable device 526, the AR device 528, and/or the HIPD 542 to continue and/or complete an operation initiated at another device. For example, after initiating the messaging application via the wrist-wearable device 526 and while the AR device 528 presents the messaging user interface 512, the user 502 can provide an input at the HIPD 542 to prepare a response (e.g., shown by the swipe gesture performed on the HIPD 542). The user 502's gestures performed on the HIPD 542 can be provided and/or displayed on another device. For example, the user 502's swipe gestures performed on the HIPD 542 are displayed on a virtual keyboard of the messaging user interface 512 displayed by the AR device 528.

In some embodiments, the wrist-wearable device 526, the AR device 528, the HIPD 542, and/or other communicatively coupled devices can present one or more notifications to the user 502. The notification can be an indication of a new message, an incoming call, an application update, a status update, etc. The user 502 can select the notification via the wrist-wearable device 526, the AR device 528, or the HIPD 542 and cause presentation of an application or operation associated with the notification on at least one device. For example, the user 502 can receive a notification that a message was received at the wrist-wearable device 526, the AR device 528, the HIPD 542, and/or other communicatively coupled device and provide a user input at the wrist-wearable device 526, the AR device 528, and/or the HIPD 542 to review the notification, and the device detecting the user input can cause an application associated with the notification to be initiated and/or presented at the wrist-wearable device 526, the AR device 528, and/or the HIPD 542.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 528 can present to the user 502 game application data and the HIPD 542 can use a controller to provide inputs to the game. Similarly, the user 502 can use the wrist-wearable device 526 to initiate a camera of the AR device 528, and the user can use the wrist-wearable device 526, the AR device 528, and/or the HIPD 542 to manipulate the image capture (e.g., zoom in or out, apply filters) and capture image data.

While an AR device 528 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 5C-1 and 5C-2, the user 502 is shown wearing the wrist-wearable device 526 and an MR device 532 (e.g., a device capable of providing either an entirely VR experience or an MR experience that displays object(s) from a physical environment at a display of the device) and holding the HIPD 542. In the third AR system 500c, the wrist-wearable device 526, the MR device 532, and/or the HIPD 542 are used to interact within an MR environment, such as a VR game or other MR/VR application. While the MR device 532 presents a representation of a VR game (e.g., first MR game environment 520) to the user 502, the wrist-wearable device 526, the MR device 532, and/or the HIPD 542 detect and coordinate one or more user inputs to allow the user 502 to interact with the VR game.

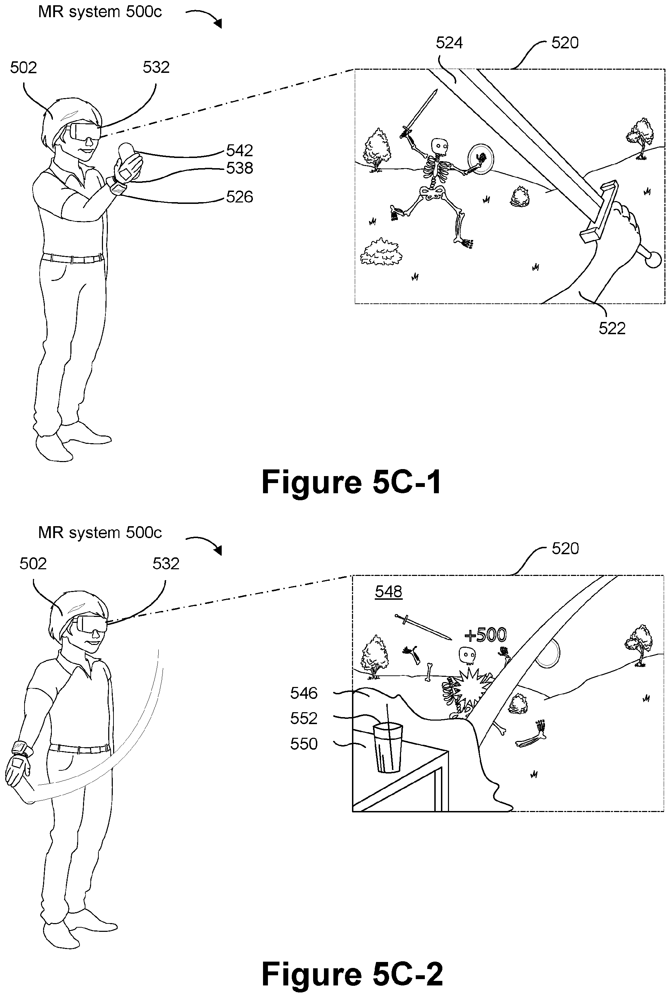

In some embodiments, the user 502 can provide a user input via the wrist-wearable device 526, the MR device 532, and/or the HIPD 542 that causes an action in a corresponding MR environment. For example, the user 502 in the third MR system 500c (shown in Figure 5C-1) raises the HIPD 542 to prepare for a swing in the first MR game environment 520. The MR device 532, responsive to the user 502 raising the HIPD 542, causes the MR representation of the user 522 to perform a similar action (e.g., raise a virtual object, such as a virtual sword 524). In some embodiments, each device uses respective sensor data and/or image data to detect the user input and provide an accurate representation of the user 502's motion. For example, image sensors (e.g., SLAM cameras or other cameras) of the HIPD 542 can be used to detect a position of the HIPD 542 relative to the user 502's body such that the virtual object can be positioned appropriately within the first MR game environment 520; sensor data from the wrist-wearable device 526 can be used to detect a velocity at which the user 502 raises the HIPD 542 such that the MR representation of the user 522 and the virtual sword 524 are synchronized with the user 502's movements; and image sensors of the MR device 532 can be used to represent the user 502's body, boundary conditions, or real-world objects within the first MR game environment 520.

In Figure 5C-2, the user 502 performs a downward swing while holding the HIPD 542. The user 502's downward swing is detected by the wrist-wearable device 526, the MR device 532, and/or the HIPD 542 and a corresponding action is performed in the first MR game environment 520. In some embodiments, the data captured by each device is used to improve the user's experience within the MR environment. For example, sensor data of the wrist-wearable device 526 can be used to determine a speed and/or force at which the downward swing is performed and image sensors of the HIPD 542 and/or the MR device 532 can be used to determine a location of the swing and how it should be represented in the first MR game environment 520, which, in turn, can be used as inputs for the MR environment (e.g., game mechanics, which can use detected speed, force, locations, and/or aspects of the user 502's actions to classify a user's inputs (e.g., user performs a light strike, hard strike, critical strike, glancing strike, miss) or calculate an output (e.g., amount of damage)).

Figure 5C-2 further illustrates that a portion of the physical environment is reconstructed and displayed at a display of the MR device 532 while the MR game environment 520 is being displayed. In this instance, a reconstruction of the physical environment 546 is displayed in place of a portion of the MR game environment 520 when object(s) in the physical environment are potentially in the path of the user (e.g., a collision with the user and an object in the physical environment are likely). Thus, this example MR game environment 520 includes (i) an immersive VR portion 548 (e.g., an environment that does not have a corollary counterpart in a nearby physical environment) and (ii) a reconstruction of the physical environment 546 (e.g., table 550 and cup 552). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 526, the MR device 532, and/or the HIPD 542 are described as detecting user inputs, in some embodiments, user inputs are detected at a single device (with the single device being responsible for distributing signals to the other devices for performing the user input). For example, the HIPD 542 can operate an application for generating the first MR game environment 520 and provide the MR device 532 with corresponding data for causing the presentation of the first MR game environment 520, as well as detect the user 502's movements (while holding the HIPD 542) to cause the performance of corresponding actions within the first MR game environment 520. Additionally or alternatively, in some embodiments, operational data (e.g., sensor data, image data, application data, device data, and/or other data) of one or more devices is provided to a single device (e.g., the HIPD 542) to process the operational data and cause respective devices to perform an action associated with processed operational data.

In some embodiments, the user 502 can wear a wrist-wearable device 526, wear an MR device 532, wear smart textile-based garments 538 (e.g., wearable haptic gloves), and/or hold an HIPD 542 device. In this embodiment, the wrist-wearable device 526, the MR device 532, and/or the smart textile-based garments 538 are used to interact within an MR environment (e.g., any AR or MR system described above in reference to Figures 5A-5B). While the MR device 532 presents a representation of an MR game (e.g., second MR game environment 520) to the user 502, the wrist-wearable device 526, the MR device 532, and/or the smart textile-based garments 538 detect and coordinate one or more user inputs to allow the user 502 to interact with the MR environment.

In some embodiments, the user 502 can provide a user input via the wrist-wearable device 526, an HIPD 542, the MR device 532, and/or the smart textile-based garments 538 that causes an action in a corresponding MR environment. In some embodiments, each device uses respective sensor data and/or image data to detect the user input and provide an accurate representation of the user 502's motion. While four different input devices are shown (e.g., a wrist-wearable device 526, an MR device 532, an HIPD 542, and a smart textile-based garment 538) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 538) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 538 can be used in conjunction with an MR device and/or an HIPD 542.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 5A-5C-2 provided above are intended to augment the description provided in reference to Figures 1-4B. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. An XR device, comprising:
a display device;
a lens; and
one or more programs, wherein the one or more programs are stored in memory and configured to be executed by one or more processors, the one or more programs including instructions for:
determining a hardware pixels-per-degree ("HPPD") metric for the XR device based on a characteristic of the display device and a characteristic of the lens;
receiving XR application data regarding visual XR content from an XR application running on the XR device;
determining a render pixels-per-degree ("RPPD") metric for the visual XR content based on the XR application data; and
responsive to determining that a difference between the HPPD metric and the RPPD metric satisfies a minimum difference threshold, enhancing the visual XR content based on the difference between the HPPD metric and the RPPD metric.

2. The XR device of Claim 1, wherein the one or more programs further include instructions for enhancing the visual XR content by (i) applying a sharpening filter to the visual XR content if the HPPD metric is greater than the RPPD metric or (ii) applying a super-sampling filter to the visual XR content if the HPPD metric is less than the RPPD metric.

3. The XR device of Claim 2, wherein the one or more programs further include instructions for:
receiving additional XR application data regarding additional visual XR content from the XR application;
determining an RPPD metric for the additional visual XR content based on the additional XR application data; and
responsive to determining that a difference between the HPPD metric and the RPPD metric for the additional visual XR content satisfies the minimum difference threshold, (i) applying a sharpening filter to the additional visual XR content if the HPPD metric is greater than the RPPD metric for the additional visual XR content or (ii) applying a super-sampling filter to the additional visual XR content if the HPPD metric is less than the RPPD metric for the additional visual XR content.

4. The XR device of Claim 2 or claim 3, wherein the one or more programs further include instructions for:
determining a plurality of HPPD metrics for the XR device, wherein each HPPD metric of the plurality of HPPD metrics corresponds to a respective location on the display device;
determining a plurality of RPPD metrics for the visual XR content, wherein each RPPD metric of the plurality of RPPD metrics corresponds to a respective portion of the visual XR content; and
for each of the HPPD metrics of the plurality of HPPD metrics and for each of the RPPD metrics of the plurality of RPPD metrics:
responsive to determining that a difference between a particular HPPD metric of the plurality of HPPD metrics and a particular RPPD metric of the plurality of RPPD metrics satisfies the minimum difference threshold, wherein the particular HPPD metric corresponds to a particular location on the display device and the particular RPPD metric corresponds to a particular portion of the visual XR content for display at the particular location on the display device:
responsive to determining that the particular HPPD metric is greater than the RPPD metric, (i) applying the sharpening filter to the particular portion of the visual XR content if the particular HPPD metric is greater than the particular RPPD metric or (ii) applying the super-sampling filter to the particular portion of the visual XR content if the particular HPPD metric is less than the particular RPPD metric.

5. The XR device of one of Claims 2 to 4, wherein applying the sharpening filter or the super-sampling filter to the visual XR content responsive to determining that the difference between the HPPD metric and the RPPD metric satisfies the minimum difference threshold substantially improves a quality of the visual XR content as compared to:
forgoing applying the sharpening filter or the super-sampling filter to the visual XR content; or
applying the sharpening filter or the super-sampling filter to the visual XR content responsive to a determination independent of the HPPD metric;
wherein the quality of the visual XR content comprises a sharpness, a framerate, or an amount of adverse artifacts in the visual XR content.

6. The XR device of any preceding Claim, wherein:
the one or more programs further include instructions for determining an amount of time until the XR device renders the visual XR content; and
enhancing the visual XR content comprises:
responsive to determining that the amount of time is sufficient for a high-quality enhancement, (i) applying a high-quality sharpening filter to the visual XR content if the HPPD metric is greater than the RPPD metric or (ii) applying a high-quality super-sampling filter to the visual XR content if the HPPD metric is less than the RPPD metric; or
responsive to determining that the amount of time is insufficient for the high-quality enhancement but sufficient for a normal-quality enhancement, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

7. The XR device of any preceding Claim, wherein enhancing the visual XR content comprises:
responsive to determining that the difference between the HPPD metric and the RPPD metric satisfies a secondary difference threshold that is greater than the minimum difference threshold, (i) applying a high-quality sharpening filter to the visual XR content if the HPPD metric is greater than the RPPD metric or (ii) applying a high-quality super-sampling filter to the visual XR content if the HPPD metric is less than the RPPD metric; or
responsive to determining that the difference between the HPPD metric and the RPPD metric does not satisfy the secondary difference threshold, (i) applying a normal-quality sharpening filter to the visual XR content if the HPPD metric is greater than the RPPD metric or (ii) applying a normal-quality super-sampling filter to the visual XR content if the HPPD metric is less than the RPPD metric.

8. The XR device of any preceding Claim, wherein:
enhancing the visual XR content is further based on an amount of the visual XR content that will be displayed in a field of view of a user of the XR device;
the XR application data identifies a location for displaying the visual XR content; and
the one or more programs further include instructions for:
determining the field of view of the user; and
determining whether the amount of the visual XR content that will be displayed in the field of view of the user based on the location for displaying the visual XR content.

9. The XR device of any preceding Claim, wherein:
enhancing the visual XR content is further based on (i) a distance between a user of the XR device and the visual XR content, (ii) a size of the visual XR content, and (ii) an angle between the user and the visual XR content;
the XR application data identifies (i) a location for displaying the visual XR content, (ii) a two-dimensional (2D) surface for displaying a 2D image panel of the visual XR content, and (iii) the size of the visual XR content;
the one or more programs further include instructions for (i) determining the distance based on the location for displaying the visual XR content and (ii) determining the angle based on the 2D surface for displaying the 2D image panel.

10. The XR device of any preceding Claim, wherein:
enhancing the visual XR content is further based on (i) an activity level associated with the visual XR content and (ii) a priority level associated with the visual XR content;
the XR application data identifies (i) interactions with the XR application by a user of the XR device and (ii) a relative priority of the visual XR content; and
the one or more programs further include instructions for (i) determining the activity level based on the interactions with the XR application and (ii) determining the priority level based on the relative priority of the visual XR content.

11. A non-transitory, computer-readable storage medium storing instructions that, when executed by one or more processors of an XR device that includes a display device and a lens, cause the XR device to perform operations including:
determining an HPPD metric for the XR device based on a characteristic of the display device and a characteristic of the lens;
receiving XR application data regarding visual XR content from an XR application running on the XR device;
determining an RPPD metric for the visual XR content based on the XR application data; and
responsive to determining that a difference between the HPPD metric and the RPPD metric satisfies a minimum difference threshold, enhancing the visual XR content based on the difference between the HPPD metric and the RPPD metric.

12. The non-transitory, computer-readable storage medium of claim 11, storing instructions that further comprise instructions in accordance with any one of claims 2 to 10.

13. A computer-implemented method for dynamically enhancing visual XR content, the method comprising:
determining an HPPD metric for an XR device based on a characteristic of a display device of the XR device and a characteristic of a lens of the XR device;
receiving XR application data regarding visual XR content from an XR application running on the XR device;
determining an RPPD metric for the visual XR content based on the XR application data; and
responsive to determining that a difference between the HPPD metric and the RPPD metric satisfies a minimum difference threshold, enhancing the visual XR content based on the difference between the HPPD metric and the RPPD metric.

14. The computer-implemented method of Claim 13, further comprising the performance of the method implemented by the instructions in accordance with any one of claims 2 to 10.
